# EUROPÄISCHE PATENTSCHRIFT

(11) **EP 3 398 811 B1**
(45) Veröffentlichungstag und Bekanntmachung des Hinweises auf die Patenterteilung: **24.06.2020**
(21) Anmeldenummer: 17460048.6
(22) Anmeldetag: 25.08.2017
(51) Int. Cl.: B60P 7/08, B60J 5/06

(54) **FUNKTIONSPROFIL FÜR EIN KRAFTFAHRZEUG**
FUNCTIONAL PROFILE FOR A MOTOR VEHICLE
PROFILÉ FONCTIONNEL POUR UN VÉHICULE AUTOMOBILE

(30) Priorität: 14.03.2017 PL 42084417
(43) Veröffentlichungstag der Anmeldung: 07.11.2018
(73) Patentinhaber: "WIELTON" Spolka Akcyjna, 98-300 Wielun (PL)
(72) Erfinder: Szczepanski, Dariuz, 98-300 Wielun (PL); Kaczor, Maciej, 98-346 Skomlin (PL); Jens, Miroslaw, 98-355 Dzialoszyn (PL); Januszka, Marcin, 44-122 Gliwice (PL); Opalka, Grzegorz, 44-217 Rybnik (PL)
(74) Vertreter: AOMB Polska Sp. z.o.o.

(56) Entgegenhaltungen:
- EP-A2- 2 431 205
- DE-A1- 10 226 067
- DE-A1-102010 045 264

## Beschreibung

Der Gegenstand der Erfindung ist ein Funktionsprofil für ein Kraftfahrzeug, die für die Montage an Kraftfahrzeugen bestimmt ist, insbesondere an Planenaufliegern, beziehungsweise an LKW-Planenanhängern. Sie ermöglicht das Einhalten der Zollvorschriften über die Sicherheit der beförderten Fracht. Das ausgearbeitete Funktionsprofil erfüllt auch zusätzlich die Funktion eines Palettenstoppers.

Es gibt viele Lösungen für Leisten, Ränder und LKW Bordwände.

Bekannt ist eine Erfindung, die in der Beschreibung des deutschen Patents DE 101 07 598 B4 (Anm. 17.02.2001 r.) "Profilrahmenträger für ein Nutzfahrzeug-Chassis" dargestellt ist. Profilrahmenträger (1) für ein Nutzfahrzeug-Chassis, der aus einem gewinkelten Profil mit einer Oberseite (2), die parallel zu der Chassis-Oberseite liegt, und einer dazu im rechten Winkel stehenden, am Chassis außen liegenden Flankenseite besteht, und der mit Vorrichtungen zur Befestigung von Endhaken, die am Ende von Zurrgurten angeordnet sind, versehen ist, dadurch gekennzeichnet, daß - die Vorrichtungen zur Befestigung der Endhaken (4, 5) in Reihe direkt in die Flankenseite des Profilrahmenträgers eingebrachte Langloch-Bohrungen (10) sind, die mit einem lichten Querschnitt versehen sind, der das Einschieben von wenigstens zwei in Träger-Achsenrichtung nebeneinander liegenden Endhaken-Profilen mit je einem Profil-Durchmesser von "a" gestattet. Der Abstand der Langloch-Bohrungen, von Mittellinie zu Mittellinie gemessen A=(b+c)/2 entspricht, wobei "b" der Minimumabstand und "c" der Maximumabstand der Haken handelsüblicher Doppel-Endhaken ist. Die Schwankungsbreite dieser Abstände "b" und "c" um den Mittelwert A beträgt etwa ± 2a.

Bekannt ist auch eine in der deutschen Patentbeschreibung DE 10 2009 030 906A1 (Anm. 26.06.2009 r.) dargestellte Lösung, in der eine Erfindung mit dem Titel "Transportfahreug mit Zollverschluss-vorrichtung" beschrieben ist. Transportfahrzeug (2) mit Zollverschlussvorrichtung für Schiebeplanen, wobei die Zollverschlussvorrichtung Zollkrampen zur Festlegung der Schiebeplanen mittels eines Zollverschlussseils aufweist, wobei die Zollverschlussvorrichtung aus mehreren Leisten (6) besteht, auf die in Abständen zueinander jeweils die Zollkrampen (4) aufgesetzt sind. Die Leisten sind seitlich am Rahmen oder Aufbau des Transportfahrzeugs befestigt und die Leisten formschlüssige Befestigungselemente (6) aufweisen, durch die die Leisten mit dem Rahmen und/oder dem Aufbau des Transportfahrzeugs formschlüssig verbindbar sind, dadurch gekennzeichnet, dass seitliche Mittelrungen oder ein anderer Blockierkörper eine Querverschiebung der Leisten blockierend zwischen zwei Leisten gesetzt und mit dem Transportfahrzeug verbunden sind und wobei die Leisten (6) nach Entfernen der seitlichen Mittelrungen oder des anderen Blockierkörpers (12) entriegelbar sind.

Es gibt auch eine in der polnischen Beschreibung des Gebrauchsmusters mit der Anmeldenummer W-120566 (Veröffentlichungstag im Patentblatt BUP 2013-06-10) dargestellte Lösung mit dem Titel "Bordwandprofil für Kraftfahrzeuge und Anhänger" bekannt. Es ist dort ein Bordwandprofil für Kraftfahrzeuge und Anhänger beschrieben worden, an dem Bandränder parallel zur Gestaltungsrichtung [Formungsrichtung] verlaufen. Diese Ränder-nach deren Ausgestaltung-sind dauerhaft mit der Bandfläche verbunden. Das Profil ist aus Stahlblech mit Stärke 1,5 bis 3,00 mm hergestellt, zeichnet sich auch dadurch aus, dass der Bereich der dauerhaften und dichten Verbindung des Wandrandes des geschlossenen Elements mit der Bordwandfläche von der Falte entfernt ist.

Ein Funktionsprofil gemäß dem Oberbegriff des Anspruchs 1 ist von DE 10 2010 045264 A1 bekannt.

Die Aufgabe der vorliegenden Erfindung ist ein Funktionsprofil für ein Kraftfahrzeug zu schaffen, das universell ist, d.h. für den Einsatz an meisten bekannten Aufliegern und LKW-Planenanhängern geeignet ist und gleichzeitig zwei Funktionen: Zollsicherung und Palettenstopper erfüllt.

Der Kern des Funktionsprofils für das Kraftfahrzeug, das zwei längliche Arme aufweist, von denen der eine am Seitenrand des Kraftfahrzeugs befestigt, der andere dagegen nach außen gegenüber dem Kraftfahrzeug gebogen ist, besteht darin, dass sie Form eines Winkelprofils aufweist, in dessen - am Seitenrand des Kraftfahrzeugs befestigten - Arm Öffnungen ausgeführt sind, aus den am Seitenrand des Kraftfahrzeuges befestigte Zollösen herausgeschoben sind [durch die am Seitenrand des Kraftfahrzeuges befestigte Zollösen durchgezogen sind]. Zusätzlich sind in diesem Arm - in dessen oberen Teil - Einlässe vorhanden, wo Haken, an denen man Spanngurte befestigt, verankert werden. In dem gebogenen Arm des Winkelprofils sind dagegen - über den Einlässen angeordnet - Ausnehmungen ausgeführt.

Vorzugsweise sind Öffnungen oder Einlässe in gleichmäßigen Abständen angeordnet.

Vorzugsweise weist der am Fahrzeugrand befestigte Arm des Funktionsprofils für das Fahrzeug, untere Zungen auf, die nach unten gerichtet und für die Einbettung in den LKW-Fahrzeugrand angefertigt und bevorzugt in gleichmäßigen Abständen angeordnet sind.

Vorzugsweise ist der am Fahrzeugrand anliegende Arm des Winkelprofils sein Montagearm.

Vorzugsweise sind die Öffnungen "bohnenförmig" und liegen vertikal.

Vorzugsweise ähnelt der Querschnitt des Funktionsprofils für das Fahrzeug in seiner Form dem Buchstaben "L" und der Öffnungswinkel zwischen den Armen des Winkelprofils beträgt 90°^{.}.

Vorzugsweise sind in dem am Fahrzeugrand befestigten Arm des Winkelprofils Befestigungsöffnungen ausgeführt, durch welche in den Seitenrand des Kraftfahrzeugs eingesetzte Schrauben oder Schrauben mit Schlitz durchgehen.

Vorzugsweise sind mindestens zwei Schrauben beziehungsweise zwei Schrauben mit Schlitz an den Seitenrand des Kraftfahrzeugs angeschweißt.

Vorzugsweise sind Befestigungsöffnungen kreisförmig.

Vorzugsweise ist gleicht der Umriss von Ausnehmungen dem flach liegenden Buchstaben "Ω".

Vorzugsweise ist der Winkelprofil aus Metall, vorzugsweise aus legiertem Konstruktionsstahl hergestellt, der einer Oberflächen-, Feuer- oder chemischen Behandlung, Galvanisierung, kathodischer Tauchlackierung unterzogen_oder mit einer Zn-Al-Legierung mit unterschiedlichem Gehalt an Metallen beschichtet worden ist.

Vorzugsweise ragt der Oberteil des Funktionsprofils über den Boden des Kraftfahrzeugs d.h. eines Aufliegers oder Anhängers hinaus.

Die erfindungsgemäße Lösung erlaubt eine einfache und schnelle Montage des Funktionsprofils an den Chassisrand verschiedener Lkw-Auflieger, insbesondere Lkw-Planenanhänger. Die ausgearbeitete Leiste erfüllt die Zollanforderungen für einen Anlieger beziehungsweise Planenanhänger. Sie ermöglicht auch einfache und effektive Sicherung der mit Lkw-Auflieger beförderten, mittels Spanngurten fixierten Güter. Die ausgearbeitete Leiste weist also den universellen Charakter auf.

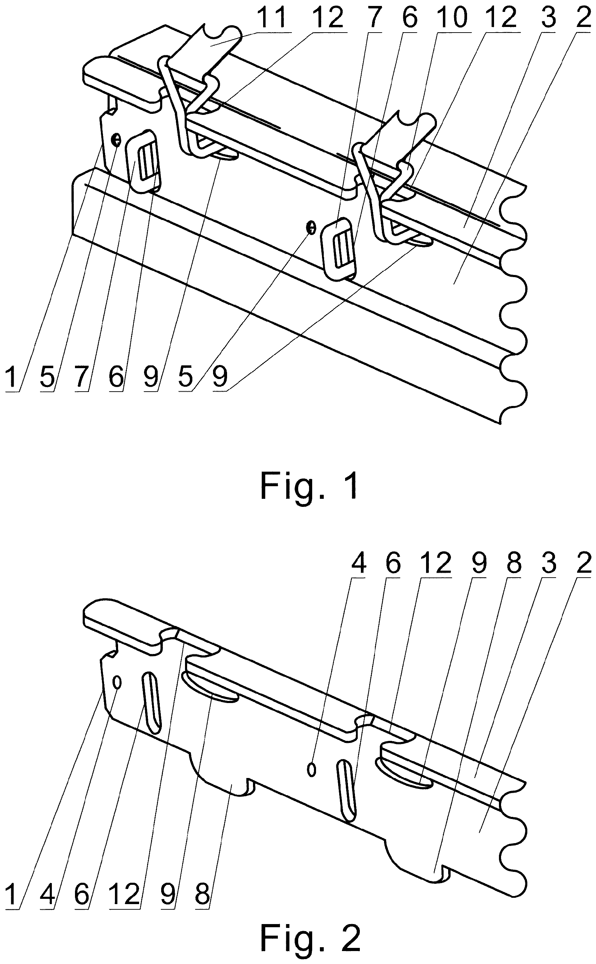

Der Gegenstand der Erfindung wurde anhand des in den Zeichnungen dargestellten Ausführungsbeispiels erläutert, es zeigen Fig. 1 - axonometrische Ansicht eines Teils des Funktionsprofils, die am Rande der Lkw-Anlieger-Rahmen befestigt ist, Fig. 2 dagegen - axonometrische Ansicht eines Teils des Funktionsprofils für Fahrzeugauflieger.

Was auf Zeichnungen zu sehen ist, weist das Funktionsprofil für ein Kraftfahrzeug die Form eines länglichen Winkelprofils 1 auf, dessen Querschnitt dem Buchstaben "L" ähnelt. Das Winkelprofil 1 verfügt über zwei Arme, die gleich sind, oder der eine breiter und der andere schmäler ist - aber immer ist einer von denen an der Seite des Fahrzeugrandes befestigt. Normalerweise sind das: ein vertikaler und in der Regel breiterer Montagearm 2 und ein daran in Längsrichtung anliegender, üblicherweise waagerechter, schmälerer Sicherungsarm 3. Die Platzierung der Arme und die Anbringung daran von einzelnen Elemente kann verschieden sein.

Das Winkelprofil 1, das üblicherweise in Form des Buchstaben "L" ausgeführt ist, kann aus verschiedenen Stoffen hergestellt werden, vorzugsweise aus Metall z.B. aus legiertem Konstruktionsstahl. Es kann auch zusätzlich geschützt werden, z.B. einer geeigneten Oberflächenbehandlung (chemischen, Feuerbehandlung) unterzogen werden d.h. Galvanisierung, kathodischer Tauchlackierung oder Beschichtung mit einer Zn-Al-Legierung mit unterschiedlichem Gehalt an Metallen.

Das Winkelprofil 1 ist an den Fahrzeugrand lösbar oder unlösbar befestigt. Das Winkelprofil 1 weist in seinem Montagearm 2 - Befestigungsöffnungen 4 auf, die in einer geeigneten linearen Anordnung d.h. in gleichen Abständen ausgeführt sind. Befestigungsöffnungen 4 ermöglichen das Funktionsprofil an den Seitenrand des Lkw-Aufliegers zu befestigen, mit Hilfe darin eingesetzten und mit Muttern fixierten Schrauben 5 oder Schrauben mit Schlitz, die durch die Befestigungsöffnungen durchgehen und in den Seitenrand des Kraftfahrzeugs versenken und auf diese Weise das Funktionsprofil befestigen und absichern. Dabei sind mindestens zwei Schrauben 5, beziehungsweise zwei Schrauben mit Schlitz - in der Regel an das Winkelprofil 1 angeschweißt, damit die Leiste undemontiertbar wird und Zollanforderungen erfüllte.

In dem gewöhnlich vertikalen Montagearm 2 des Winkelprofils 1 sind auch senkrechte "bohnenförmige" Öffnungen 6 ausgeführt, die normalerweise auch in gleichmäßigen Abständen angeordnet sind, ähnlich wie im Fall der Befestigungsöffnungen 4. Die Öffnungsform 6 entspricht der Form der Zollöse 7, denn durch die senkrechten, "bohnenförmigen" Öffnungen 6 werden - am Rande des Aufliegers angebrachte - stählerne Zollösen 7 des Randes des Planenaufliegers hineingeschoben, was (nach der Planenmontage) erlaubt, mittels so heraugezogener stählerner Zollösen 7 das Zollseil [TIR-Seil] oder das eine Aufliegerplane an den unteren Rand des Aufliegers befestigende Seil durchzuziehen. Die Zollösen 7 sind locker durch "bohnenförmige" Öffnungen 6 durchgezogen und dank der beschriebenen Leistenkonstruktion müssen sie an den Seitenrand des Aufliegers überhaupt nicht angeschraubt werden, was bei anderen, bisher bekannten Lösungen der Fall ist.

Das ausgearbeitete Funktionsprofil erfüllt dank ihrer weiteren Konstruktionselementen auch andere Funktionen.

Und so weist der Montagearm 2 des Winkelprofils 1 auch untere Zungen 8 auf, die leicht in die Vertiefung des Seitenrandes des Aufliegers hineingesetzt sind, was bessere Befestigung des Funktionsprofils an den Rand garantiert. Auf diese Weise sichern untere Zungen 8, ähnlich wie Befestigungsöffnungen 4 samt in denen eingesetzten Schrauben 5 oder Schrauben mit Schlitz - zusätzlich das Funktionsprofil vor dem Herabfallen von dem Aufliegerrand. Untere Zungen 8 sind üblicherweise in dem breiterem, vertikalen Montagearm 2 des Winkelprofils 1 in einer bestimmten Reihe angeordnet. Sie sind nach unten gerichtet und für ihre Einbettung in dem früher vorbereiteten Rahmenrand eines Aufliegers beziehungsweise eines LKW-Anhängers angefertigt. Dabei ist es nicht notwendig, dass die ganze Zunge 8 in die Vertiefung des Aufliegerrandes versenkt ist. Es ist nur wichtig, dass das Ende der Zunge 8 in der Vertiefung festsitzt. Die beschriebenen Zungen 8, abgesehen davon, dass sie das Winkelprofil 1 besser befestigen - verdecken zusätzlich auch andere Öffnungen, was die Sicherheit des Aufliegers gemäß Zollvorschriften garantiert.

Der Montagearm 2 des Winkelprofils 1 verfügt auch über in seinem oberen Teil angeordnete und waagerecht platzierte ovale Einlässe 9, die zur Verankerung von Haken 10 dienen, an denen Spanngurte 11 befestigt sind, welche Güter vor dem Herausfallen aus dem Auflieger sichern. Die Einlässe 9 sind ähnlich wie Befestigungsöffnungen 4 und Öffnungen 6 in bestimmter Reihenfolge im Montagearm 2 des Winkelprofils 1 ausgeführt.

Der gewöhnlich waagerechte Sicherungsarm 3 ist in Bezug auf das Innere des LKW-Aufliegers nach außen gebogen und im Verhältnis zu dem normalerweise vertikalen Montagearm 2 des Winkelprofils 1 vorzugsweise bei einem Winkel von 90° angeordnet. Was von Bedeutung ist, weist der Sicherungsarm 3 Ausnehmungen 12 auf, deren Umriss dem flach liegenden Buchstaben "Ω" gleicht. Sie sind in der Regel in gleichmäßigen Abständen, aber immer über Einlässen 9 angeordnet und erfüllen eine wichtige Rolle, weil sie Einhakung der Haken 10 erlauben. Die Ausnehmungen 12 stabilisieren die Lage der Haken 10 und dadurch die Position der Spanngurte 12.

Auf Grund der beschriebenen Konstruktion erfüllt also das ausgearbeitete Funktionsprofil gleichzeitig die Funktion eines Palettenstoppers, weil der obere Teil des Funktionsprofils über den Boden des Aufliegers oder Anhängers hinausragt und freies Rutschen von Güterpaletten quer durch den Auflieger öder Anhänger hindert.

Auf diese Weise hergestellte Leiste erlaubt ganz einfache, effiziente, sichere und schnelle Sicherung der mit Auflieger oder Planenanhänger beförderten Güter.

### Verzeichnis:

- 1.: Winkelprofil;
- 2.: Montagearm;
- 3.: Sicherungsarm;
- 4.: Befestigungsöffnungen;
- 5.: Schraube (beziehungsweise Schraube mit Schlitz);
- 6.: Öffnung ("bohnenförmig");
- 7.: Zollöse;
- 8.: Zunge (untere;
- 9.: Einlass (oval);
- 10.: Haken;
- 11.: Spanngurt;
- 12.: Ausnehmung.

## Patentansprüche

1. Funktionsprofil für ein Kraftfahrzeug, das zwei längliche Arme aufweist, von denen der eine am Seitenrand des Kraftfahrzeugs befestigt, der andere dagegen nach außen gegenüber dem Kraftfahrzeug gebogen ist, **dadurch gekennzeichnet, dass** es die Form eines Winkelprofils (1) hat, in dessen - am Seitenrand des Kraftfahrzeugs befestigten - Arm Öffnungen (6) ausgeführt sind, durch welche am Seitenrand des Kraftfahrzeuges angebrachten Zollösen (7) durchgezogen sind, und zusätzlich in diesem Arm - in dessen oberen Teil - Einlässe (9) vorhanden sind, die zur Verankerung von Haken (10) dienen, an denen man Spanngurte (11) befestigt, in dem gebogenen Arm des Winkelprofils (1) dagegen - über den Einlässen (9) - Ausnehmungen (12) ausgeführt sind.

2. Funktionsprofil nach Anspruch 1, **dadurch gekennzeichnet, dass** die Öffnungen (6) oder Einlässe (9) in gleichmäßigen Abständen angeordnet sind.

3. Funktionsprofil nach Anspruch 1 oder 2, **dadurch gekennzeichnet, dass** ihr an dem Fahrzeugrand befestigter Arm untere Zungen (8) aufweist, die nach unten gerichtet, und für die Einbettung in den Rand des Lastfahrzeuges angefertigt, und vorzugsweise in gleichmäßigen Abständen angeordnet sind.

4. Funktionsprofil nach Anspruch 1 oder 2 oder 3, **dadurch gekennzeichnet, dass** der am Fahrzeugrand anliegende Arm des Winkelprofils (1) sein Montagearm (2) ist.

5. Funktionsprofil nach einem der Ansprüche 1 bis 4, **dadurch gekennzeichnet, dass** die Öffnungen (6) "bohnenförmig" und senkrecht angeordnet sind.

6. Funktionsprofil nach einem der Ansprüche 1 bis 5, **dadurch gekennzeichnet, dass** ein Querschnitt des Winkelprofils in seiner Form dem Buchstaben "L" ähnelt und der Öffnungswinkel zwischen den Armen des Winkelprofils (1) 90° beträgt.

7. Funktionsprofil nach einem der Ansprüche 1 bis 6, **dadurch gekennzeichnet, dass** in dem am Fahrzeugrand befestigten Arm des Winkelprofils (1) Befestigungsöffnungen (4) ausgeführt sind, durch welche in den Seitenrand des Kraftfahrzeugs versenkte [eingesetzte] Schrauben (5) oder Schrauben mit Schlitz durchgehen.

8. Funktionsprofil nach Anspruch 7, **dadurch gekennzeichnet, dass** wenigstens zwei Schrauben (5) beziehungsweise zwei Schrauben mit Schlitz - an den Seitenrand des Kraftfahrzeugs angeschweißt sind.

9. Funktionsprofil nach Anspruch 7 oder 8, **dadurch gekennzeichnet, dass** die Befestigungsöffnungen (4) kreisförmig sind.

10. Funktionsprofil nach einem der Ansprüche 1 bis 9, **dadurch gekennzeichnet, dass** der Umriss der Ausnehmungen (12) dem flach liegenden Buchstaben "Ω" gleicht.

11. Funktionsprofil nach einem der Ansprüche 1 bis 10, **dadurch gekennzeichnet, dass** das Winkelprofil (1) aus Metall, vorzugsweise aus legiertem Konstruktionsstahl hergestellt ist, der einer oberflächen-, feuer- oder chemischen Behandlung, Galvanisierung, kathodischer Tauchlackierung unterzogen oder mit einer Zn-Al-Legierung mit unterschiedlichem Gehalt an Metallen beschichtet worden ist.

12. Funktionsprofil nach einem der Ansprüche 1 bis 11, **dadurch gekennzeichnet, dass** der Oberteil des Funktionsprofils über den Boden des Kraftfahrzeugs d.h. eines Aufliegers oder Anhängers hinausragt, in den sie eingebaut wurde.

## Claims

1. A functional profile for a motor vehicle, comprising two elongate arms, one of which is fixed to the side edge of the motor vehicle, while the other is bent outwards with respect to the motor vehicle, **characterized in that** it is in the form of an angle profile (1) in whose arm - fixed to the side edge of the motor vehicle - openings (6) are formed, through which customs eyelets (7) attached to the side edge of the motor vehicle are passed, and in addition in this arm - in the upper part of which - there are inlets (9) which serve for anchoring hooks (10) to which tension belts (11) are attached, whereas in the bent arm of the angle profile (1) - above the inlets (9) - recesses (12) are made.

2. The functional profile according to claim 1, **wherein** the openings (6) or inlets (9) are arranged at regular intervals.

3. The functional profile according to claim 1 or 2, **wherein** its arm fixed to the edge of the motor vehicle comprises lower tongues (8) which are directed downwards and are made for embedding in the edge of the lorry, and are preferably arranged at regular intervals.

4. The functional profile according to claim 1 or 2 or 3, **wherein** the arm of the angle profile (1) resting against the motor vehicle edge is its mounting arm (2).

5. The functional profile according to one of claims 1 to 4, **wherein** the openings (6) are "bean-shaped" and arranged vertically.

6. The functional profile according to one of claims 1 to 5, **wherein** a cross-section of the angle profile resembles the letter "L" in its shape and the opening angle between the arms of the angle profile (1) is 90°.

7. The functional profile according to any one of claims 1 to 6, wherein in the arm of the angle profile (1) fixed to the edge of the motor vehicle, fixing openings (4) are provided, through which screws (5) recessed [inserted] in the side edge of the motor vehicle or screws with a slot pass.

8. The functional profile according to claim 7, **wherein** at least two screws (5) or rather two screws with a slot are welded to the side edge of the motor vehicle.

9. The functional profile according to claim 7 or 8, **wherein** the fixing openings (4) are circular.

10. The functional profile according to one of claims 1 to 9, **wherein** the outline of the recesses (12) resembles the letter "Ω" lying flat.

11. The functional profile according to any one of claims 1 to 10, **wherein** the angle profile (1) is made of metal, preferably of alloyed structural steel which has been subjected to surface, fire or chemical treatment, electroplating, cathodic dip coating or has been coated with a Zn-AI alloy with a different content of metals.

12. The functional profile according to any one of claims 1 to 11, **wherein** the upper part of the functional profile protrudes beyond the floor of the motor vehicle, i.e. of a semi-trailer or trailer, in which it has been installed.

## Revendications

1. Un profil fonctionnel pour un véhicule à moteur, comprenant deux bras allongés, dont l'un est fixé au bord latéral du véhicule à moteur, tandis que l'autre est courbé vers l'extérieur par rapport au véhicule à moteur, **caractérisé en ce qu'**il se présente sous la forme d'un profil angulaire (1) dans le bras duquel - fixé au bord latéral du véhicule à moteur - des ouvertures (6) sont formées, à travers lesquelles des oeillets (7) fixés au bord latéral du véhicule à moteur sont passés, et en plus dans ce bras - dans la partie supérieure dulaquel - il y a des entrées (9) qui servent à ancrer les crochets (10) auxquels sont attachées les courroies de tension (11), tandis que dans le bras courbé de la profil angulaire (1) - au-dessus des entrées (9) - des évidements (12) sont réalisés.

2. Le profil fonctionnel selon la revendication 1, **caractérisé en ce que** les ouvertures (6) ou les entrées (9) sont disposées à intervalles réguliers.

3. Le profil fonctionnel selon la revendication 1 ou 2, **caractérisé en ce que** son bras fixé au bord du véhicule à moteur comprend des languettes inférieures (8) qui sont dirigées vers le bas et sont conçues pour être encastrées dans le bord du camion, et sont de préférence disposées à intervalles réguliers .

4. Le profil fonctionnel selon la revendication 1 ou 2, ou 3, **caractérisé en ce que** le bras du profil angulaire (1) en appui contre le bord du véhicule à moteur est son bras de montage (2).

5. Le profil fonctionnel selon l'une des revendications 1 à 4, **caractérisé en ce que** les ouvertures (6) sont « en forme de haricot » et disposées verticalement.

6. Le profil fonctionnel selon l'une des revendications 1 à 5, **caractérisé en ce qu'**une section transversale du profil angulaire ressemble à la lettre « L » dans sa forme et l'angle d'ouverture entre les bras du profil angulaire (1) est de 90°.

7. Le profil fonctionnel selon l'une quelconque des revendications 1 à 6, **caractérisé en ce que** dans le bras du profilé angulaire (1) fixé au bord du véhicule à moteur, des ouvertures de fixation (4) sont prévues, à travers lesquelles des vis (5) enfoncées [insérées] dans le bord latéral du véhicule à moteur ou des vis à fente sont passés.

8. Le profil fonctionnel selon la revendication 7, **caractérisé en ce qu'**au moins deux vis (5) ou deux vis à fente sont soudées sur le bord latéral du véhicule à moteur.

9. Le profil fonctionnel selon la revendication 7 ou 8, **caractérisé en ce que** les ouvertures de fixation (4) sont circulaires.

10. Le profil fonctionnel selon l'une des revendications 1 à 9, **caractérisé en ce que** le contour des évidements (12) ressemble à la lettre « Ω » couchée à plat.

11. Le profil fonctionnel selon l'une quelconque des revendications 1 à 10, **caractérisé en ce que** le profilé angulaire (1) est en métal, de préférence en acier de construction allié qui a été soumis à un traitement de surface, au feu ou chimique, à une galvanisation, à une peinture par immersion cathodique ou a été recouvert d'un alliage Zn-Al avec une teneur différente en métaux.

12. Le profil fonctionnel selon l'une quelconque des revendications 1 à 11, **caractérisé en ce que** la partie supérieure du profil fonctionnel fait saillie au-delà du plancher du véhicule à moteur, c'est-à-dire d'une semi-remorque ou d'une remorque, dans laquelle il a été installé.
